# FASCICULE DE BREVET EUROPEEN

(11) **EP 1 604 900 B1**
(45) Date de publication et mention de la délivrance du brevet: **30.04.2008**
(21) Numéro de dépôt: 05300398.4
(22) Date de dépôt: 24.05.2005
(51) Int. Cl.: B64D 29/04

(54) **Aéronef muni d'un carénage au croisement du fuselage avec la voilure**
Flugzeug mit Flügel-Rumpf-Verkleidung
Aircraft comprising a fairing at the intersection between the fuselage and the wing

(30) Priorité: 11.06.2004 FR 0451159
(43) Date de publication de la demande: 14.12.2005
(73) Titulaire: AIRBUS France, 31060 Toulouse (FR)
(72) Inventeur: Rouyre, François, 31700, CORNEBARRIEU (FR)
(74) Mandataire: Camus, Olivier Jean-Claude

(56) Documents cités:
- EP-A- 0 947 421
- FR-A- 2 836 890
- US-A1- 2003 163 985
- US-B1- 6 340 135

## Description

L'invention a pour objet un aéronef muni d'un carénage au croisement du fuselage avec la voiture . Plus précisément, l'invention a pour objet un aéronef dont ce carénage a une longueur importante. Le carénage de l'aéronef de l'invention est formé de deux parties indépendantes. L'invention trouve une application dans le domaine de l'aéronautique.

Un but de l'invention est de fournir un carénage apte à absorber des efforts de compression et de flexion dus aux déplacements de l'aéronef et transmis au carénage, quelle que soit la taille dudit carénage. Plus précisément, le but de l'invention est donc de diminuer les charges frontales encaissées par le carénage. Un but supplémentaire de l'invention est de diminuer un poids total d'un aéronef muni d'un carénage.

On connaît dans le domaine de l'aéronautique des aéronefs munis d'un carénage ventral, connu également sous le nom de "Belly Fairing". Le carénage est fixé à l'endroit d'une partie inférieure d'un fuselage de l'aéronef, au croisement du fuselage avec la voilure. Le carénage ventral obture la partie inférieure du fuselage. Le carénage ventral, en forme de berceau, est muni d'une base et de deux rebords, ou panneaux, longitudinaux remontant latéralement de part et d'autre du fuselage. Chaque panneau est muni d'un évidemment apte à laisser passer une aile de la voilure de l'aéronef.

Actuellement, le carénage est fixé à la partie inférieure du fuselage, sur toute une périphérie dudit carénage. On peut également ajouter des dispositifs de fixation ponctuelle, tels que ceux décrits dans le brevet FR 2 836 890, afin d'optimiser le maintien du carénage sur le fuselage. Ainsi, par exemple, un aéronef muni d'un carénage d'une vingtaine de mètres peut être muni d'une douzaine de ces dispositifs de fixation ponctuelle, répartis régulièrement sur toute une surface du carénage. Chaque dispositif de fixation ponctuelle relie le carénage à une structure interne du fuselage.

Une telle solution donne de bons résultats quant au maintien du carénage sur le fuselage pour des aéronefs de petite ou moyenne taille. Par aéronef de petite ou moyenne taille, on entend aéronef dont le carénage ventral ne dépasse pas 25 mètres de long, c'est à dire 25 mètres calculés depuis l'avant jusqu'à l'arrière de l'aéronef, l'avant et l'arrière de l'aéronef étant définis par rapport au sens d'avancement de l'aéronef. En effet, dans le cas d'un tel aéronef, les dimensions du carénage sont telles que ledit carénage est apte à absorber les efforts de compression et de flexion auxquels il est soumis lors d'un déplacement de l'aéronef.

Cependant, on tend de plus en plus à augmenter la taille des aéronefs, notamment pour augmenter une quantité de chargement lors de chaque transport. La taille du carénage associé peut atteindre plus d'une trentaine de mètres. Du fait de la longueur, certaines zones d'un tel carénage peuvent être soumises à des efforts importants de compression, liés à la flexion du fuselage. Ces efforts sont difficilement absorbés par le carénage.

Pour résoudre ce problème, il est possible d'utiliser un grand nombre de dispositifs de fixation ponctuelle, afin d'assurer un bon maintien du carénage sur le fuselage, sur toute la longueur dudit carénage. Cependant, la multiplication des dispositifs de fixation ponctuelle augmente considérablement la masse totale de l'aéronef.

Dans l'invention, on cherche à résoudre les problèmes énoncés ci-dessus, en proposant un carénage en deux parties. Les deux parties sont indépendantes l'une de l'autre d'un point de vue structural, mais elles assurent la continuité de forme aérodynamique. Chaque partie est solidaire du fuselage de l'aéronef par l'intermédiaire d'une fixation d'une périphérie de chaque partie sur des structures internes du carénage. Avantageusement, une extrémité arrière du carénage est indépendante du reste dudit carénage. En effet, une partie arrière du carénage, comprenant l'extrémité arrière, est, de par sa taille, la partie du carénage la plus soumise aux efforts de compression et de flexion. En coupant la partie arrière, on diminue la transmission de la charge frontale le long de ladite partie arrière, depuis une extrémité avant jusqu'à l'extrémité arrière du carénage. On diminue par ailleurs le nombre de dispositifs de fixation ponctuelle nécessaire au maintien du carénage sur le fuselage, puisque le carénage est moins soumis aux forces tendant à l'arracher du carénage.

L'invention a pour objet un aéronef selon la revendication 1.

Selon des exemples de réalisation de l'invention, l'aéronef peut également comporter tout ou parties des caractéristiques suivantes :
- une première partie du carénage comporte un tronçon avant, un tronçon central et une première section d'un tronçon arrière, une seconde partie du carénage comportant une seconde section du tronçon arrière
- la première partie du carénage est munie de quatre dispositifs de fixation ponctuelle de ladite première partie sur des structures internes du fuselage ;
- il comporte un joint compressible disposé entre les deux parties du carénage ;
- il comporte deux panneaux, respectivement solidaire de la première section du tronçon arrière du carénage ventral et solidaire de la seconde section du tronçon arrière du carénage ventral, les panneaux se chevauchant au moins partiellement et étant aptes à glisser l'un par rapport à l'autre ;
- il comporte une couche intermédiaire disposée entre les deux panneaux, la couche étant apte à diminuer des frottements entre les deux panneaux ;
- la couche intermédiaire est en matériau plastique à faible coefficient de friction ;
- il comporte au moins un dispositif de jonction périphérique apte à relier une périphérie des deux parties du carénage ventral au fuselage ;
- le carénage est solidaire d'une partie inférieure du fuselage ;
- le carénage est solidaire d'une partie supérieure du fuselage.

L'invention sera mieux comprise à la lecture de la description qui suit et à l'examen des figures qui l'accompagnent. Celles-ci sont présentées à titre indicatif et nullement limitatif de l'invention. Les figures représentent :
- figure 1 : une vue de dessous d'un aéronef muni d'un carénage de l'état de la technique ;
- figure 2 : une vue de dessus d'un carénage de l'état de la technique ;
- figure 3 : une représentation schématique d'un carénage selon un exemple de réalisation de l'invention ;
- figures 4a et 4b : un exemple de réalisation d'un dispositif de jonction périphérique des pièces d'un carénage de l'invention ;
- figures 5a à 5c : un second exemple de réalisation d'un dispositif de jonction périphérique des pièces d'un carénage de l'invention ;
- figure 6 : un troisième exemple de réalisation d'un dispositif de jonction des pièces d'un carénage de l'invention.

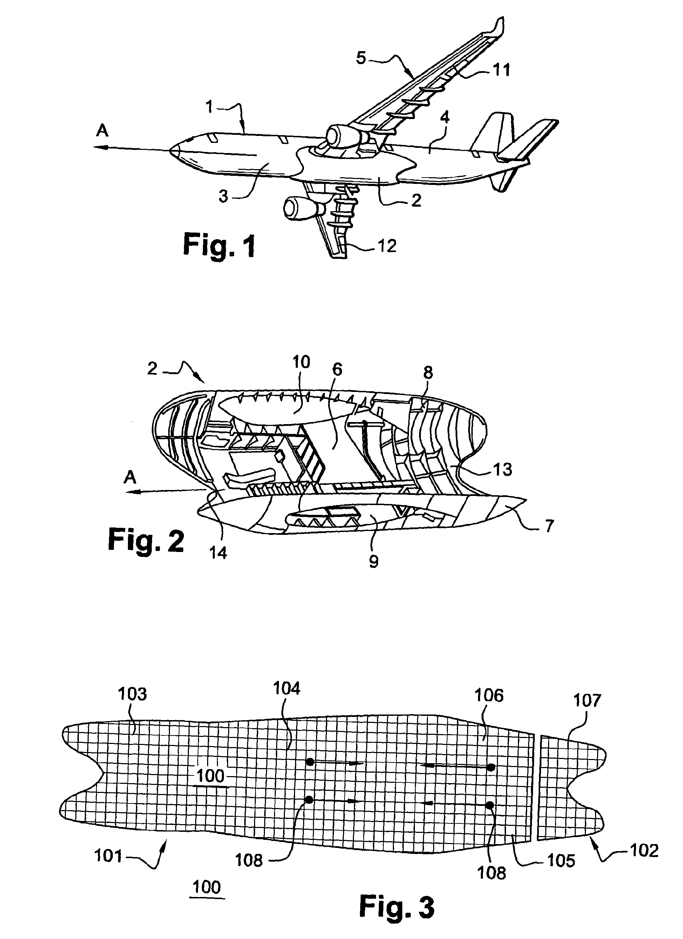

Sur la figure 1, on peut voir un aéronef 1 muni d'un carénage 2 ventral tel qu'on les connaît dans l'état de la technique. Le carénage 2 est monobloc. Le carénage 2 est solidaire d'une partie basse 3 du fuselage 4 de l'aéronef 1, au croisement du fuselage 4 avec la voilure 5 de l'aéronef 1.

La figure 2 montre plus en détail le carénage 2 de l'état de la technique. Le carénage 2 a une forme générale en berceau. Le carénage 2 ventral est muni d'une base 6 et de deux rebords 7 et 8, ou panneaux longitudinaux remontant latéralement de part et d'autre du fuselage 4 (figure 1). Chaque panneau 7 et 8 est muni d'un évidemment respectivement 9 ou 10 apte à laisser passer une aile 11 ou 12 de la voilure 5 de l'aéronef 1.

Un tel carénage 2 est soumis à des efforts de compression et de flexion dus notamment à une avancée A de l'aéronef 1. En effet, le carénage 2 ventral est proéminent par rapport à la partie basse 3 de l'aéronef 1 et offre donc une surface sur laquelle des forces d'arrachement, de compression et de flexion peuvent s'exercer.

Si le carénage 2 a une taille importante, c'est à dire dépassant les 20 mètres de long, ledit carénage 2 peut tendre à fléchir sous l'action de ces forces.

Les inventeurs ont observé que dans un tel cas, une extrémité arrière 13 du carénage 2 est plus à même de fléchir, du fait de la répartition des forces, qu'une extrémité avant 14 dudit carénage 2. Aussi, dans l'invention, on propose, comme cela est représenté à la figure 3, un carénage 100 en deux parties 101 et 102 indépendantes. Une forme générale en berceau du carénage 100 est maintenue. Avantageusement la première partie 101 comporte un tronçon avant 103, un tronçon central 104 et une section avant 106, ou première section, d'un tronçon arrière 105, tandis que la seconde partie 102 comporte une section arrière 107, ou seconde section, du tronçon arrière 105. Le tronçon arrière 105, qui est le plus soumis aux forces d'arrachement, de compression et de flexion, étant sectionné en deux sections indépendantes 106 et 107, les efforts encaissés par la section avant 106 du tronçon arrière 105 ne sont plus, ou pour le moins que très partiellement, transmis à la section arrière 107 du tronçon arrière 105.

Bien entendu, il est également possible de réaliser un carénage 100 en deux parties dans lesquelles la répartition des tronçons 103, 104 et 105 est différente. Par exemple, la première partie peut comporter le tronçon avant 103 et une section du tronçon central 104, tandis que la seconde partie comporte l'autre section du tronçon central 104 et le tronçon arrière 105. De même, la première partie 101 peut comporter le tronçon avant 103 et le tronçon central 104, tandis que la seconde partie 102 comporte le tronçon arrière 105 du carénage 100. Dans tous les cas, le but recherché est le même, à savoir atténuer la transmission des efforts le long du carénage 100.

Dans un exemple de réalisation de l'invention, et tel que cela est représenté sur la figure 3, on peut munir l'aéronef muni du carénage 100 de l'invention, de dispositifs de fixation ponctuelle 108. Dans tous les cas, le carénage 100 de l'invention ne nécessite pas autant de dispositifs de fixation ponctuelle 108 que le carénage 2 monobloc de l'état de la technique. En effet, les phénomènes de compression et de flexion du carénage 100 étant supprimés, ou tout au moins fortement diminués, par la présence des deux parties 101 et 102 indépendantes, la fixation périphérique du carénage 100 sur la partie basse du fuselage de l'aéronef permet le maintien dudit carénage 100 sur le fuselage. Cependant, on peut prévoir de parfaire la liaison entre le carénage 100 et le fuselage par l'intermédiaire de dispositifs de fixation ponctuelle 108 disposés stratégiquement sur le carénage 100. Dans l'exemple représenté à la figure 3, le carénage 100 est muni de quatre dispositifs de fixation ponctuelle 108. Deux dispositifs de fixation ponctuelle 108 sont disposés à l'endroit du tronçon central 104 du carénage 100, et deux autres dispositifs de fixation ponctuelle 108 sont disposés à l'endroit de la section avant 106 du tronçon arrière 105. Selon l'endroit où le carénage 100 est sectionné, on utilisera plus ou moins de dispositifs de fixation 108, et on modifiera leurs positions le long dudit carénage 100. Chaque dispositif 108 de fixation ponctuelle permet de maintenir localement le carénage 100 sur une structure interne (non représentée) du fuselage de l'aéronef auquel il est fixé.

Afin d'absorber au mieux les efforts d'arrachement, de compression et de flexion, le carénage 100 est réalisé de manière à ce que la deuxième partie 102 puisse se déplacer par rapport à la première partie 101, de manière à ce que les forces d'arrachement, de compression et de flexion auxquels la première partie 101 est soumise soient en grande partie absorbés et quasiment pas transmis à la deuxième partie 102. En effet, la deuxième partie 102 du carénage 100 est dépourvue, dans les exemples décrits, de dispositif 108 de fixation ponctuelle entre ladite deuxième partie 102 et le fuselage. La deuxième partie 102 du carénage 100 n'est solidarisée au fuselage que par l'intermédiaire d'une liaison périphérique entre le carénage 100 et le fuselage. La deuxième partie 102 peut ainsi être au moins partiellement mobile par rapport à la partie 101 qui elle est, par exemple, munie de quatre dispositifs 108 de fixation ponctuelle. Bien entendu, si c'est la première partie 101 du carénage 100 qui est dépourvue de dispositif 108 de fixation ponctuelle, et la deuxième partie 102 qui en est pourvue, c'est la première partie 101 qui peut se déplacer par rapport à la deuxième partie 102 qui, elle est alors fixe.

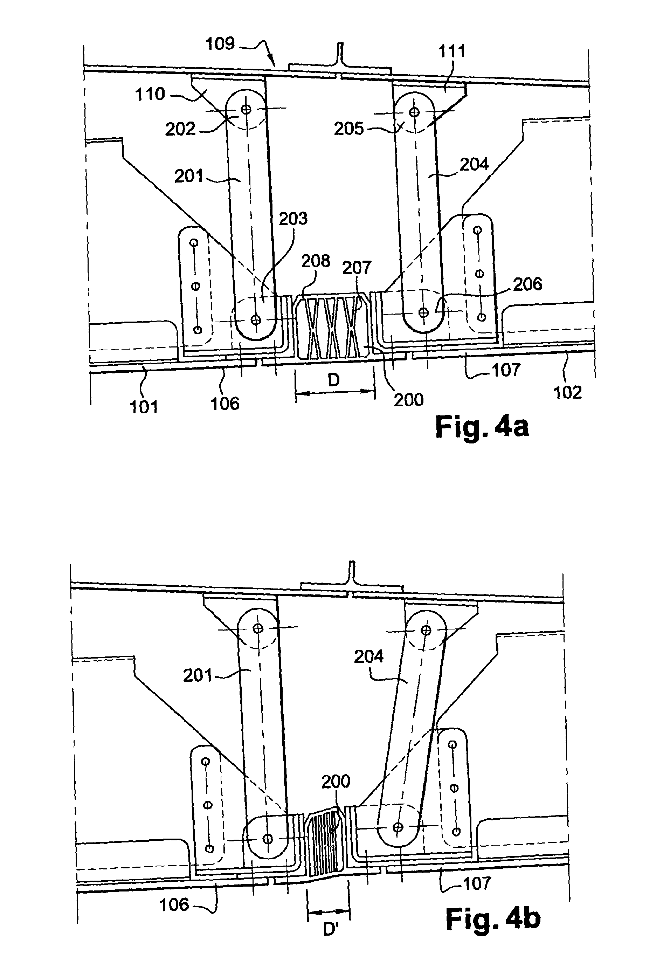

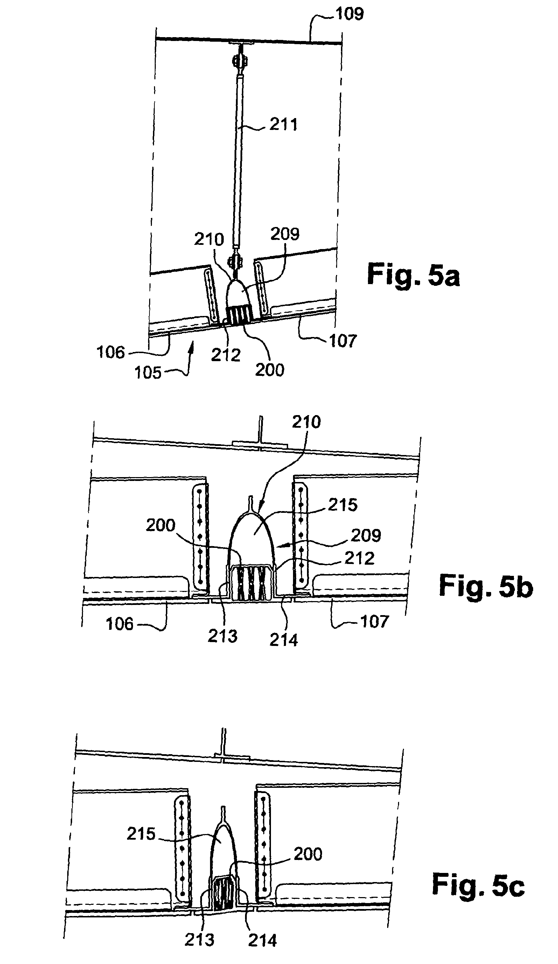

Par exemple, comme cela est représenté sur les figures 4a, 4b, 5a, 5b et 5c, on peut prévoir de disposer un joint 200 compressible entre les deux parties 101 et 102 du carénage 100.

Sur les figures 4a et 4b est représenté un premier exemple de réalisation d'une telle solution.

Sur la figure 4a, le joint 200, disposé entre la première partie 101 et la deuxième partie 102 du carénage 100, est dans un état non contraint, tandis qu'à la figure 4b, le joint 200 est dans un état contraint. La section avant 106 du tronçon arrière 105 est solidaire d'une structure interne 109 du fuselage, par l'intermédiaire d'une première biellette verticale 201, formant un dispositif de jonction périphérique. Une extrémité haute 202, c'est à dire dirigée vers l'intérieur de l'aéronef, de la première biellette 201 est montée fixe sur une ferrure 110 solidaire de la structure interne 109 du fuselage. Une extrémité basse 203, opposée à l'extrémité haute 202, de la biellette 201 est montée fixe sur la section avant 106 du tronçon arrière 105 du carénage 100. La section arrière 107 du tronçon arrière 105 est solidaire de la structure interne 109 du fuselage par l'intermédiaire d'un dispositif de jonction périphérique formé par une seconde biellette verticale 204. Une extrémité haute 205 de la biellette 204 est montée en rotation sur une ferrure 111 de la structure interne 109 du fuselage. Une extrémité basse 206 de la seconde biellette 204 est montée en rotation sur la section arrière 107 du tronçon arrière 105. Une distance D entre la section avant 106 du tronçon arrière 105 et la section arrière 107 dudit tronçon 105 est comblée par la présence du joint 200, dans un état non contraint.

Sur la figure 4b, le joint 200 est comprimé. La section arrière 107 du tronçon arrière 105 s'est déplacée en direction de la section avant 106 dudit tronçon arrière 105. Le déplacement de la section arrière 107 est autorisé par une rotation de la deuxième biellette 204. Le joint 200 est écrasé entre la section arrière 107 et la section avant 106 du tronçon arrière 105. Par exemple, le joint 200 est formé d'une structure interne 207 en mousse, recouverte d'une structure externe 208 en caoutchouc. Une telle composition permet au joint 200 d'absorber de façon optimum les efforts de compression et flexion. Ainsi, une distance D' entre la section avant 106 du tronçon arrière 105 et la section arrière 107 dudit tronçon 105 peut varier, c'est à dire que le joint 200 peut être plus ou moins comprimé, en fonction des efforts à absorber.

Sur les figures 5a à 5c est représenté un second exemple de réalisation de l'utilisation d'un joint compressible 200 entre les deux parties 101 et 102 du carénage 100 de l'invention.

Sur la figure 5a, on peut voir une vue d'ensemble de ce second exemple de réalisation. Le joint 200 est disposé dans un cadre 209 en forme de fer à cheval. Une partie haute 210 du cadre 209 est reliée par l'intermédiaire d'une bielle 211 à la structure interne 109 du fuselage, tandis qu'une partie basse 212 dudit cadre 209 est reliée à la section avant 106 et à la section arrière 107 du tronçon arrière 105 du carénage 100.

Sur les figures 5b et 5c on peut voir plus en détail le cadre 209, et le joint 200, respectivement dans un état non contraint et dans un état contraint. La partie basse 212 du cadre 209 comporte deux branches souples 213 et 214, respectivement solidaires de la section avant 106 et de la section arrière 107 du tronçon arrière 105. Lorsque la section arrière 107 du tronçon arrière 105 tend à se rapprocher de la section avant 106 dudit tronçon 105, les branches 213 et 214 se rapprochent l'une de l'autre, comprimant le joint 200 logé dans un espace 215 ménagé entre les deux branches 213 et 214.

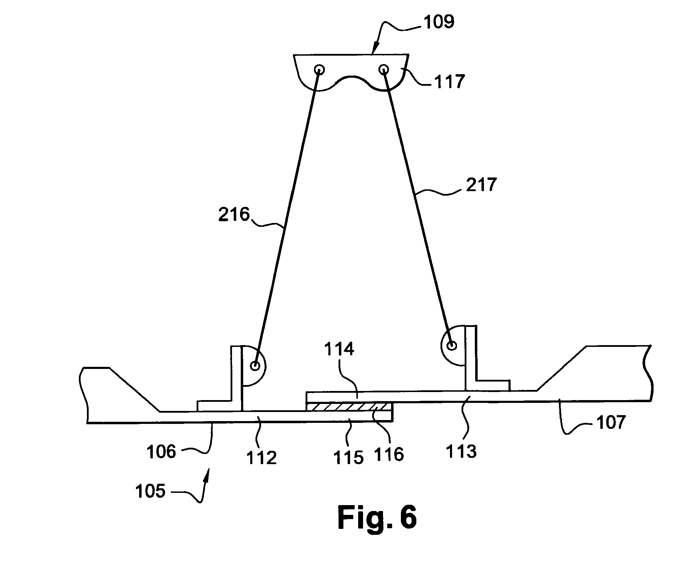

Sur la figure 6 est représenté un autre exemple de réalisation d'une liaison entre la première 101 et la deuxième 102 partie du carénage 100. La section avant 106 du tronçon arrière 105 est munie d'un panneau 112. La section arrière 107 du tronçon arrière 105 est munie d'un panneau 113. Une périphérie de chaque panneau 112 et 113 est solidaire, par l'intermédiaire d'une biellette 216 et 217, de la structure interne 109 du fuselage. Par exemple, la structure interne 109 est munie d'une ferrure double 117, sur laquelle sont montées les deux biellettes 216 et 217. La liaison entre la structure interne 109 et les panneaux 112 et 113 est telle que au moins le panneau 113 peut se déplacer latéralement par rapport au panneau 112.

Dans l'exemple représenté sur la figure 6, le panneau 113 chevauche partiellement le panneau 112, c'est à dire qu'une partie 114 du panneau 113 est située à l'intérieur du fuselage, au dessus d'une partie 115 du panneau 112 qu'elle chevauche. Dans un autre exemple de réalisation de l'invention, il est possible de monter les panneaux 112 et 113 de manière à ce que le panneau 112 chevauche le panneau 113. Ainsi, les panneaux 112 et 113 peuvent glisser l'un par rapport l'autre, de manière à rapprocher et / ou éloigner l'une de l'autre les sections avant 106 et arrière 107 du tronçon arrière 105, afin d'absorber les efforts de compression et de flexion auxquels le carénage est soumis.

Afin de faciliter un glissement du panneau 113 sur le panneau 112, il est possible, comme cela est représenté sur la figure 6, de disposer entre les deux panneaux 112 et 113 une couche 116 d'un matériau à faible coefficient de friction. Par exemple, on dispose entre la partie 114 du panneau 113 et la partie 115 du panneau 112 une couche 116 en matériau plastique tel que du Téflon.

Dans tous les cas, on prévoit de solidariser également chaque partie 101 et 102 du carénage 100 avec le fuselage 4 par une liaison périphérique classique, afin de fermer la partie inférieure 3 du fuselage 4.

Selon une disposition de la voilure 5 sur le fuselage 4, le carénage 100 peut être solidaire d'une partie différente dudit fuselage 4. Par exemple, lorsque l'aéronef 1 est muni d'une voilure 5 basse, comme représenté figure 1, le carénage 100 est solidaire de la partie inférieure 3 du fuselage. Dans le cas d'un aéronef à voilure haute, par contre, le carénage étant situé sur la voilure, il est solidaire d'une partie supérieure du fuselage.

## Revendications

1. Aéronef (1) comportant un fuselage (4), une voiture (5), et un carénage (100) au croisement du fuselage avec la voiture, une périphérie dudit carénage étant solidaire du fuselage, **caractérisé en ce que** le carénage est en deux parties (101, 102) structurellement indépendantes, de manière à atténuer la transmission des efforts le long du carénage, chacune des deux parties étant solidaire du fuselage, la deuxième partie du carénage étant reliée à la structure interne du fuselage par des bielles (204,211) montées en rotation sur la structure interne du fuselage et la deuxième partie du carénage, de manière à ce que ladite deuxième partie puisse se déplacer par rapport à la première partie dudit carénage.

2. Aéronef selon la revendication 1, **caractérisé en ce qu'**une première partie (101) du carénage comporte un tronçon avant (103), un tronçon central (104) et une première section (106) d'un tronçon arrière (105), une seconde partie (102) du carénage comportant une seconde section (107) du tronçon arrière.

3. Aéronef selon l'une quelconque des revendications 1 à 2, **caractérisé en ce que** la première partie du carénage est munie de quatre dispositifs de fixation ponctuelle (108) de ladite première partie sur des structures internes (109) du fuselage.

4. Aéronef selon l'une des revendications 1 à 3, **caractérisé en ce qu**'il comporte un joint (200) compressible disposé entre les deux parties du carénage.

5. Aéronef selon l'une des revendications 1 à 4, **caractérisé en ce qu**'il comporte deux panneaux (112, 113), respectivement solidaire de la première section du tronçon arrière du carénage et solidaire de la seconde section du tronçon arrière du carénage, les panneaux se chevauchant au moins partiellement et étant aptes à glisser l'un par rapport à l'autre.

6. Aéronef selon la revendication 5, **caractérisé en ce qu**'il comporte une couche intermédiaire (116) disposée entre les deux panneaux, la couche étant apte à diminuer des frottements entre les deux panneaux.

7. Aéronef selon la revendication 6, **caractérisé en ce que** la couche intermédiaire est en matériau plastique à faible coefficient de friction.

8. Aéronef selon l'une des revendications 1 à 7, **caractérisé en ce qu'**il comporte au moins un dispositif de jonction périphérique (201, 204, 211, 214, 215) apte à relier une périphérie des deux parties du carénage au fuselage.

9. Aéronef selon l'une des revendications 1 à 8, **caractérisé en ce que** le carénage est solidaire d'une partie inférieure (3) du fuselage.

10. Aéronef selon l'une des revendications 1 à 8, **caractérisé en ce que** le carénage est solidaire d'une partie supérieure du fuselage.

## Claims

1. - An aircraft (1) comprising a fuselage (4), an airfoil (5) and a fairing (100) where the airfoil crosses the fuselage, a periphery of the said fairing being integral with the fuselage, **characterised in that** the fairing is made of two structurally independent parts (101, 102), thereby reducing the stress transmission along the fairing, each one of the two parts being integral with the fuselage, the second part of the fairing being linked to the internal structure of the fuselage by way of connecting rods (204, 211) mounted in rotation onto the internal structure of the fuselage and onto the second part of the fairing, so that the said second part may be moved in relation to the first part of the said fairing.

2. - An aircraft according to claim 1, **characterised in that** a first part (101) of the fairing comprises a front section (103), a central section (104) and a first portion (106) of a rear section (105), with a second part (102) of the fairing comprising a second portion (107) of the rear section.

3. - An aircraft according to any of the claims 1 to 2, **characterised in that** the first part of the fairing is equipped with four specific fastening means (108) of the said first part onto the internal structures (109) of the fuselage.

4. - An aircraft according to one of the claims 1 to 3, **characterised in that** it comprises a compressible joint (200) placed between the two parts of the fairing.

5. - An aircraft according to claims 1 to 4, **characterised in that** it comprises two panels (112, 113), respectively integral with the first portion of the rear section of the fairing and integral with the second portion of the rear section of the fairing, the panels overlapping each another at least partially, each one being able to slide, one in relation to the other.

6. - An aircraft according to claim 5, **characterised in that** it comprises an intermediate layer (116) placed between the two panels, the layer being capable of reducing friction between the two panels.

7. - An aircraft according to claim 6, **characterised in that** the intermediate layer is made of plastic with a low coefficient of friction.

8. - An aircraft according to one of the claims 1 to 7, **characterised in that** it comprises at least one peripheral junction device (201, 204, 211, 214, 215) capable of connecting a periphery of the two parts of the fairing onto the fuselage.

9. - An aircraft according to one of the claims 1 to 8, **characterised in that** the fairing is integral with a lower part (3) of the fuselage.

10. - An aircraft according to one of the claims 1 to 8, **characterised in that** the fairing is integral with an upper part of the fuselage.

## Patentansprüche

1. Luftfahrzeug (1) mit einem Rumpf (4), einem Tragwerk (5) und einer Flügelendkappe (100) an der Kreuzung des Rumpfes mit dem Tragwerk, wobei eine Peripherie der besagten Flügelendkappe fest mit dem Rumpf verbunden ist, **dadurch gekennzeichnet, dass** die Flügelendkappe aus zwei strukturell unabhängigen Teilen (101, 102) besteht, sodass die Kraftübertragung entlang der Flügelendkappe gedämpft wird, wobei jedes der beiden Teile fest mit dem Rumpf verbunden ist, und der zweite Teil der Flügelendkappe durch Pleuel (204, 211), die drehend auf der internen Struktur des Rumpfes und dem zweiten Teil der Flügelendkappe montiert sind, mit der internen Struktur des Rumpfes verbunden ist, sodass der besagte zweite Teil im Verhältnis zum ersten Teil der besagten Flügelendkappe beweglich ist.

2. Luftfahrzeug nach Anspruch 1, **dadurch gekennzeichnet, dass** ein erster Teil (101) der Flügelendkappe einen vorderen Abschnitt (103), einen mittleren Abschnitt (104) und eine erste Sektion (106) eines hinteren Abschnitts (105) enthält, und ein zweiter Teil (102) der Flügelendkappe eine zweite Sektion (107) des hinteren Abschnitts enthält.

3. Luftfahrzeug nach irgendeinem der Ansprüche 1 bis 2, **dadurch gekennzeichnet, dass** der erste Abschnitt der Flügelendkappe mit vier Vorrichtungen zur punktuellen Befestigung (108) des besagten ersten Abschnitts auf den internen Strukturen (109) des Rumpfes versehen ist.

4. Luftfahrzeug nach irgendeinem der Ansprüche 1 bis 3, **dadurch gekennzeichnet, dass** es eine komprimierbare Dichtung (200) enthält, die zwischen den beiden Abschnitten der Flügelendkappe angeordnet ist.

5. Luftfahrzeug nach irgendeinem der Ansprüche 1 bis 4, **dadurch gekennzeichnet, dass** es zwei Platten (112, 113) enthält, die jeweils fest mit der ersten Sektion des hinteren Abschnitts der Flügelendkappe, beziehungsweise mit der zweiten Sektion des hinteren Abschnitts der Flügelendkappe verbunden sind, und die beiden Platten zumindest teilweise überlappend sind, und übereinander gleiten können.

6. Luftfahrzeug nach Anspruch 5, **dadurch gekennzeichnet, dass** es eine Zwischenschicht (116) enthält, die zwischen den beiden Platten angebracht ist, wobei die Schicht in der Lage ist, die Reibungen zwischen den beiden Platten zu verringern.

7. Luftfahrzeug nach Anspruch 6, **dadurch gekennzeichnet, dass** die Zwischenschicht aus einem Kunststoffmaterial mit einem geringen Reibungskoeffizienten besteht.

8. Luftfahrzeug nach irgendeinem der Ansprüche 1 bis 7, **dadurch gekennzeichnet, dass** es zumindest eine periphere Verbindungsvorrichtung (201, 204, 211, 214, 215) enthält, die in der Lage ist, eine Peripherie der beiden Teile der Flügelendkappe mit dem Rumpf zu verbinden.

9. Luftfahrzeug nach irgendeinem der Ansprüche 1 bis 8, **dadurch gekennzeichnet, dass** die Flügelendkappe fest mit einem unteren Teil (3) des Rumpfes verbunden ist.

10. Luftfahrzeug nach irgendeinem der Ansprüche 1 bis 8, **dadurch gekennzeichnet, dass** die Flügelendkappe fest mit einem oberen Teil des Rumpfes verbunden ist.
